# FASCICULE DE BREVET EUROPEEN

(11) **EP 4 282 495 B1**
(45) Date de publication et mention de la délivrance du brevet: **02.07.2025**
(21) Numéro de dépôt: 23173520.0
(22) Date de dépôt: 16.05.2023
(51) Int. Cl.: A63B 5/12, A63B 21/00, A63B 71/00, F16B 5/00, F16B 9/00

(54) **DISPOSITIF D'ACCOUPLEMENT ENTRE ÉLÉMENTS D'UNE INSTALLATION SPORTIVE, ET INSTALLATION SPORTIVE COMPRENANT UN TEL DISPOSITIF**
KUPPLUNGSVORRICHTUNG ZWISCHEN ELEMENTEN EINER SPORTANLAGE UND SPORTANLAGE MIT EINER SOLCHEN VORRICHTUNG
COUPLING DEVICE BETWEEN ELEMENTS OF A SPORTS FACILITY, AND SPORTS FACILITY COMPRISING SUCH A DEVICE

(30) Priorité: 23.05.2022 FR 2204912
(43) Date de publication de la demande: 29.11.2023
(73) Titulaire: Gymnova, 13012 Marseille (FR)
(72) Inventeur: CAROZZANI, Joris, 69007 LYON (FR)
(74) Mandataire: Santarelli

(56) Documents cités:
- EP-B1- 2 558 168
- WO-A1-00/26545
- FR-A1- 2 673 250
- US-A1- 2006 251 473

## Description

### DOMAINE TECHNIQUE DE L'INVENTION

Le domaine de l'invention est celui de l'accouplement entre éléments de structure et agrès d'installations destinées à une pratique sportive.

Plus précisément, l'invention concerne un dispositif d'accouplement entre un élément de structure mâle, ou encore un agrès mâle, et un élément de structure femelle d'une installation destinée à une pratique sportive.

L'invention trouve notamment des applications dans l'accouplement de modules de parkour les uns aux autres, ou encore dans l'accouplement d'agrès tels que des barres, à un module de parkour. L'invention trouve également des applications dans le domaine de l'escalade, pour l'accouplement d'agrès tels des prises d'escalade sur un mur d'escalade, ou encore dans le domaine des installations de gymnastique.

### ÉTAT DE LA TECHNIQUE

Le parkour, ou « art du déplacement », est une discipline sportive acrobatique qui consiste à franchir des obstacles urbains ou naturels. La professionnalisation de cette discipline a vu naître le besoin d'installations sportives d'entrainement ou de compétition. Ces installations sont constituées d'éléments de structure tels que des modules prenant la forme de caissons, et d'agrès tels que des barres, poignées, prises, échelles, plans inclinés, fixés audits modules. Les installations de ce type doivent être modulables, afin de pouvoir varier la configuration des parcours, mais également afin de pouvoir les déplacer aisément d'un lieu à un autre, par exemple entre deux événements sportifs tels que des compétitions.

Des solutions modulaires permettant de répondre partiellement à ce besoin sont connues de la technique, toutefois elles ne permettent généralement qu'une fixation d'agrès à des éléments de structure, mais non pas d'éléments de structure entre eux. Les éléments de structure, pouvant être des caissons de plusieurs mètres d'envergure, doivent être disposés et couplés les uns aux autres manuellement. De plus, les modules ou caissons sont généralement relativement lourds, c'est-à-dire qu'ils ne sont généralement pas déplaçables aisément par un seul individu. Lorsque deux modules doivent être couplés, les solutions connues nécessitent d'aligner très précisément les modules au niveau de leurs points de fixation, ce qui est particulièrement chronophage et complexe à réaliser. Un problème similaire des systèmes connus se pose lors de la séparation de modules, les points de fixation n'étant pas aisément accessibles, nécessitant alors une intervention chronophage et complexe.

Il est également connu de l'art antérieur d'autres techniques de fixation d'agrès à des éléments de structure d'installations sportives, notamment pour la fixation de prises d'escalade à des murs d'escalade. De telles solutions peuvent prendre la forme de simples fixations par vis, qui ont été par la suite améliorées de façon à permettre des fixations plus simples et rapides. Ces systèmes ne sont toutefois pas adaptés pour une utilisation sur des installations de parkour. Le document WO0026545A1 décrit un dispositif d'accouplement avec un appareil mâle et un élément structurel femelle d'une installation adaptée à une pratique sportive telle que le parkour ou l'escalade, dans lequel ledit dispositif comprend un corps principal cylindrique destiné à être introduit dans une ouverture cylindrique correspondante d'une paroi dudit élément structurel femelle.

Ainsi, il existe un besoin d'une solution d'accouplement entre des éléments de structure, ou au choix, d'agrès sur un élément de structure, dans le cadre d'installation sportives notamment destinées à la pratique du parkour et de l'escalade. En d'autres termes, une solution universelle d'accouplement d'éléments de structure et/ou d'agrès est recherchée, une telle solution devant permettre une fixation simple et rapide, sans outil et sans effort des éléments/agrès entre eux. En particulier, une telle solution doit également permettre un couplage/découplage simple et rapide d'éléments de structure particulièrement lourds et encombrants.

De plus, afin de pouvoir être autorisée à l'utilisation, une telle solution doit répondre aux normes de coincement en vigueur, à savoir notamment les normes EN 913:2018 parue en décembre 2018 et EN 16899:2016 parue en novembre 2016.

### EXPOSÉ DE L'INVENTION

La présente invention vise à remédier à tout ou partie des inconvénients de l'état de la technique cités ci-dessus.

À cet effet, l'invention vise un dispositif d'accouplement entre un élément de structure mâle, ou un agrès mâle, et un élément de structure femelle d'une installation destinée à une pratique sportive tel que le parkour ou l'escalade.

Ledit dispositif comprend un corps principal cylindrique destiné à être introduit dans une ouverture cylindrique correspondante d'une paroi dudit élément de structure femelle.

Ledit corps principal comprend une lumière transversale dans laquelle est agencé un galet apte à coulisser entre deux positions extrêmes, ainsi qu'un moyen de rappel dudit galet dans une position dite déverrouillée, dans laquelle le dispositif est à apte à être introduit ou retiré de ladite ouverture de l'élément de structure femelle.

Ledit galet est apte à être fixé audit élément de structure mâle ou agrès mâle d'un côté du corps principal, et est lié à une bride d'un autre côté du corps principal.

Ladite bride possède une base prolongeant ledit corps principal cylindrique lorsque ledit galet est dans la position déverrouillée, et adaptée pour former une butée contre la paroi dudit élément de structure femelle lorsque ledit galet est dans une position dite verrouillée, de manière à coupler ledit élément de structure mâle, ou agrès mâle, audit élément de structure femelle.

Ainsi, lorsque le dispositif d'accouplement est en position verrouillée, la base de la bride excentrique forme une butée en appui sur la paroi de l'élément de structure femelle. De cette manière, la paroi de l'élément de structure femelle est bloquée, ou « prise en sandwich », entre la base de la bride et la paroi de l'élément de structure mâle, ou agrès mâle, auquel est fixé le dispositif d'accouplement. Ainsi, un accouplement ferme entre les éléments de structure est obtenu, qui ne peut être levé que par translation relative des éléments de structure.

Grâce à la cinématique particulière du dispositif, l'accouplement ou couplage de deux éléments se fait simplement par rapprochement des éléments, puis par translation relative, ce qui rend l'assemblage et le désassemblage d'installations sportives, notamment de parkour, particulièrement simple et rapide, sans besoin d'outils spécifiques.

De plus, le dispositif d'accouplement obtenu permet à la fois une solidarisation à d'élément de structure tels des modules ou caissons, et une solidarisation d'agrès, à des éléments de structure. Un système d'accouplement modulaire peut être obtenu en prévoyant des éléments de structure et agrès avec une pluralité de points de fixation de dispositifs d'accouplement et d'ouvertures femelles, standardisés et répartis uniformément.

La présence du moyen de rappel permet un retour en position déverrouillée par défaut, ce qui facilite le démontage de deux modules.

Enfin, le dispositif d'accouplement permet de satisfaire les normes de coincement en vigueur, grâce à la fiabilité de la fixation obtenue. Par ailleurs, le risque de coincement, notamment de doigts ou morceaux de tissu, et fortement réduit par le dispositif proposé.

Il convient de préciser que la forme cylindrique du corps principal et de l'ouverture peut être une forme cylindrique quelconque, et n'est pas nécessairement une forme cylindrique circulaire notamment.

Selon une variante préférentielle, le corps principal est cylindrique circulaire droit.

Une telle variante présente l'avantage d'une réalisation particulièrement simple à la fois du corps principal et de l'ouverture de l'élément de structure femelle.

Selon une autre variante préférentielle, le corps principal est prismatique droit.

Une telle variante permet de maintenir la position angulaire du corps principal lorsqu'il est introduit dans l'ouverture correspondante, sans nécessiter de moyens supplémentaires.

Selon une variante particulière, lorsque le corps principal est cylindrique circulaire droit, il possède un diamètre supérieur ou égal à 43 millimètres.

Une telle dimension permet avantageusement de satisfaire les normes de coincement en vigueur, ladite ouverture correspondante au corps principal étant alors d'un diamètre supérieur ou égal à 45 millimètres.

Selon un mode de réalisation avantageux, ladite bride est de forme tronconique avec une base proximale dudit corps principal.

Grâce à une telle forme, la bride possède également une fonction de guidage dans l'ouverture de l'élément de structure femelle. Ceci permet de compenser un léger désalignement de la bride et de l'ouverture lors de l'opération de couplage. En particulier lorsque la zone comportant le dispositif d'accouplement n'est pas accessible visuellement, l'accouplement entre les éléments de structure peut être malgré tout réalisé, sans effort ni difficultés.

Selon un mode de réalisation préférentiel, la base de la bride est sensiblement de même forme et de mêmes dimensions que la base du corps principal cylindrique.

Ainsi, la base de la bride et la base du corps principal peuvent être superposées en position déverrouillée sans saillir, ou déborder, l'une par rapport à l'autre, ce qui permet une introduction particulièrement aisée et sans accrochage du dispositif d'accouplement dans l'ouverture de la structure femelle.

Selon un mode de réalisation, le galet possède un premier téton saillant d'un côté du corps principal, destiné à être introduit dans une ouverture correspondante de l'élément de structure mâle ou agrès mâle, et un second téton saillant de l'autre côté du corps principal, introduit dans une ouverture correspondante pratiquée dans la base de ladite bride.

De cette manière, un positionnement exact du corps principal sur la paroi de l'élément de structure mâle, et de la bride sur le corps principal, peuvent être obtenus. Ainsi, notamment lorsque plusieurs dispositifs d'accouplement sont utilisés, il peut être assuré que les galets coulissent selon des directions parallèles, et qu'il n'existe pas de risque de blocage lors de l'accouplement. Il peut également être assuré que la bride ne dépasse pas du corps principal, et n'entrave pas l'introduction dans l'ouverture de l'élément de structure femelle.

Selon une variante préférentielle, le dispositif comprend une vis de fixation traversant ledit galet et ladite bride, destinée à être visée dans ledit élément de structure mâle ou agrès mâle, ou dans une contre-bride apte à s'appuyer sur ledit élément de structure mâle ou agrès mâle.

Selon une variante préférentielle, ledit moyen de rappel est un ressort hélicoïdal de compression.

L'invention vise également une installation sportive comprenant un élément de structure femelle, tel un module de parkour, et un élément de structure mâle, tel un autre module de parkour, ledit élément de structure femelle et ledit élément de structure mâle étant couplés au moyen d'au moins un dispositif d'accouplement fixé audit élément de structure mâle et étant introduit dans une ouverture correspondante d'une paroi dudit élément de structure femelle.

Selon une variante préférentielle, ledit élément de structure femelle et ledit élément de structure mâle sont couplés au moyen d'au moins deux dispositifs d'accouplement.

Ainsi, une meilleure cohésion de l'installation est obtenue. En particulier, toute rotation des éléments de structure l'un par rapport à l'autre peut être évitée.

Selon les circonstances, notamment la taille et le poids des éléments de structure, l'utilisation de trois ou quatre dispositifs d'accouplement peut être envisagée.

L'invention vise également une installation sportive comprenant un élément de structure femelle, tel un module de parkour, et un agrès mâle, tel une prise d'escalade, une barre ou poignée, ledit élément de structure femelle et ledit agrès mâle étant couplés au moyen d'au moins un dispositif d'accouplement fixé audit agrès mâle et étant introduit dans une ouverture correspondante d'une paroi dudit élément de structure femelle.

En particulier, dans le cadre d'agrès de petite taille telle une barre ou une prise d'escalade, un seul dispositif d'accouplement peut être utilisé. Dans le cadre d'agrès tels des échelles ou des poignées, l'utilisation de deux dispositifs d'accouplement peut être envisagée.

Selon une variante préférentielle, ledit agrès mâle comprend un moyen de maintien en position angulaire dudit agrès sur ledit élément de structure femelle, ledit moyen de maintien étant préférentiellement une goupille ou une vis introduite dans une ouverture dudit agrès mâle et dudit élément de structure femelle.

La présence d'un tel moyen de maintien est particulièrement importante lorsqu'un seul dispositif d'accouplement est utilisé, une rotation inopinée de l'agrès pouvant ainsi être évitée.

L'invention vise également un ensemble comprenant un élément de structure comprenant au moins un point de fixation d'un dispositif d'accouplement, et comprenant en outre un dispositif de levage de l'élément de structure, configuré pour déplacer l'élément de structure entre une position relevée par défaut, et une position abaissée.

Grâce à ces dispositions, un élément de structure, en particulier mâle (c'est-à-dire qu'il comprend un dispositif d'accouplement fixé à l'une de ses parois), peut être positionné en vis-à-vis d'un élément de structure femelle dans une position relevée, puis être abaissé une fois le dispositif d'accouplement introduit dans l'ouverture de l'élément de structure femelle, de manière à coupler les modules. Ceci permet une manipulation beaucoup plus aisée des modules, permettant une installation plus rapide et plus sûre.

Selon une variante préférentielle, ledit dispositif de levage comprend un chariot muni de roulettes, ledit élément de structure étant agencé mobile en translation sur ledit chariot.

Ainsi, le chariot, qui reste à tout moment sur la surface sur laquelle sont installés les modules, permet de déplacer aisément l'élément de structure. L'élément de structure lui-même peut être relevé ou abaissé par rapport au chariot, selon les besoins.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- la figure 1 est une vue schématique en perspective d'une installation sportive avec deux modules couplés,
- la figure 2 est une vue en coupe longitudinale de l'installation sportive de la figure 1,
- la figure 3 est une vue schématique en perspective en coupe du dispositif d'accouplement,
- la figure 4 est une vue schématique en perspective en coupe du dispositif d'accouplement fixé sur un module, en position déverrouillée,
- la figure 5 est une vue schématique en perspective en coupe du dispositif d'accouplement fixé sur un module, en position verrouillée,
- la figure 6 est une vue schématique en perspective d'une installation sportive avec deux modules en vis-à-vis avant couplage,
- la figure 7 est une vue schématique en perspective d'un module avec un dispositif de levage,
- la figure 8 est une autre vue en perspective du module de la figure 7,
- la figure 9 est une vue schématique en perspective d'une installation avec un module muni d'un agrès couplé au moyen d'un dispositif d'accouplement,
- la figure 10 est une vue schématique en perspective en coupe du de l'installation de la figure 9.

### DESCRIPTION DÉTAILLÉE DE L'INVENTION

La présente description est donnée à titre d'exemple de réalisation non limitatif.

Une installation sportive 10, en particulier destinée à la pratique du parkour, est généralement composée d'une pluralité d'élément de structure 11, également appelées modules 11, prenant notamment la forme de caissons. Les caissons sont généralement creux, et comportent des parois pouvant par exemple être en bois.

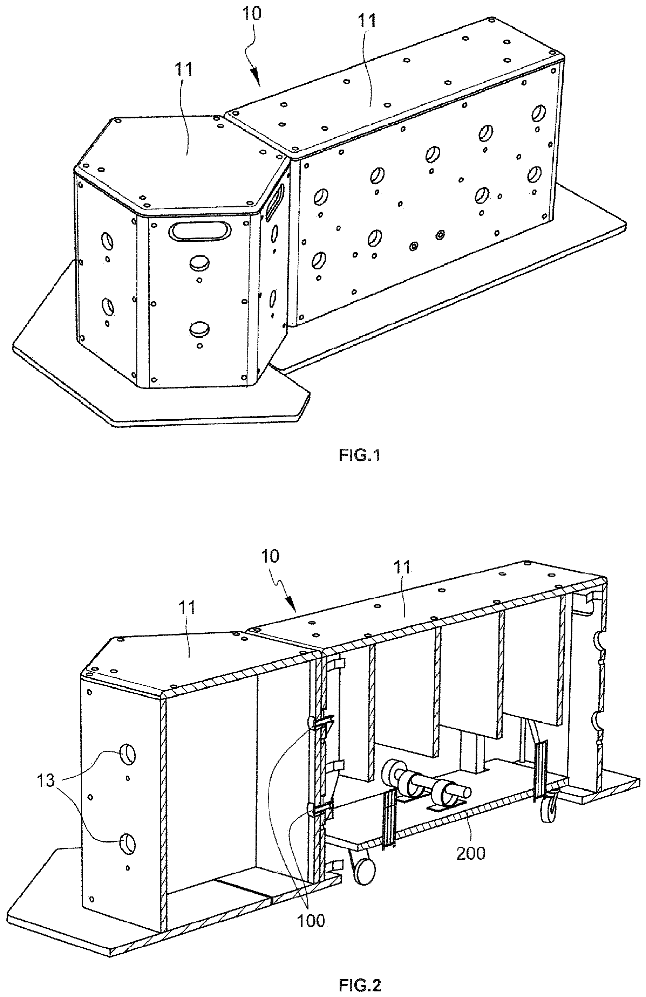

Tel que cela est représenté à la figure 1, une telle installation sportive 10 peut comprendre deux modules 11 disposés côte à côte. Les modules 11 peuvent être de forme identique ou différente, comme par exemple une forme cylindrique hexagonale, et une forme parallélépipédique, tel que visible à la figure 1. Il est ainsi possible de créer des parcours sportifs variés en assemblant le nombre et le type de modules 11 souhaités. De plus, il est généralement possible de fixer un certain nombre d'agrès aux modules 11, selon les besoins.

La figure 2 représente une vue en coupe longitudinale de l'installation sportive 10 de la figure 1.

Les modules 11 sont couplés l'un à l'autre au moyen de dispositifs d'accouplement 100, tel que représenté à la figure 2. En règle générale, pour fixer deux modules 11 l'un à l'autre, deux dispositifs d'accouplement 100 sont suffisants. Il est toutefois possible d'utiliser un nombre plus faible ou plus important de dispositifs d'accouplement 100 selon les circonstances.

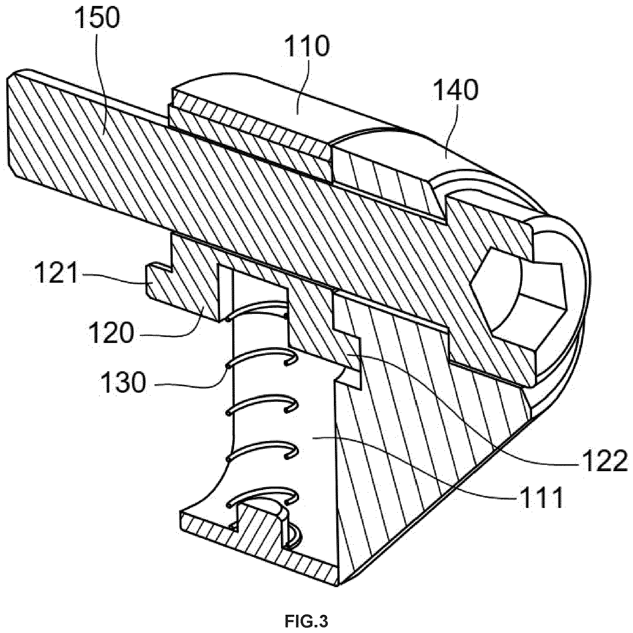

Il est maintenant fait référence à la figure 3, qui représente un dispositif d'accouplement 100 pris isolément.

Un module d'accouplement 100 comprend un corps principal 110 cylindrique. Préférentiellement, le corps principal 110 est cylindrique droit.

Le corps principal 110 possède une hauteur correspondant sensiblement à l'épaisseur d'une paroi d'un module 11. Ainsi, la hauteur du corps principal est comprise entre 15 et 25 mm, et en particulier d'environ 18 mm.

Le corps principal 110 est préférentiellement de forme cylindrique circulaire. Il peut toutefois également être de forme prismatique, telle une forme cylindrique hexagonale par exemple, régulière ou non, ou encore cylindrique ovale.

Lorsque le corps principal 110 est de forme cylindrique circulaire, son diamètre est préférentiellement supérieur ou égal à 43 millimètres. Ce diamètre, adapté pour que le corps principal 110 puisse être introduit dans une ouverture 13 correspondante d'un module femelle, d'un diamètre supérieur ou égal à 45 millimètres, tel que décrit ci-après, permet de satisfaire les normes de coincement en vigueur, et permet en particulier d'éviter le coincement de doigts ou de tissus lors de la pratique sportive ou lors de l'installation de modules 11.

Le corps principal 110 présente une lumière 111 transversale. La lumière 111 est sensiblement rectiligne. La lumière 111 s'étend sur une longueur sensiblement inférieure au diamètre du corps principal 110. La lumière 111 est par ailleurs traversante sur la hauteur du corps principal 110. Préférentiellement, la lumière 111 est d'une largeur de 15 mm. Lorsque le corps principal 100 possède un diamètre d'environ 43 mm, la longueur de la lumière est d'environ 38 à 42 mm, par exemple 39,5 mm.

Un galet 120 est agencé dans la lumière 111. Le galet 120 est sensiblement de la même largeur que la lumière 111, et sensiblement de la même hauteur que le corps principal 110. Préférentiellement, la longueur du galet 120 est environ la moitié de la longueur de la lumière 111.

Le galet 120 est apte à coulisser dans la lumière 111, entre deux positions extrêmes, correspondant chacune à une position dans laquelle le galet 120 est en butée contre l'une des parois transversales, opposées, de la lumière 111.

Un moyen de rappel, tel un ressort 130, est agencé entre le galet 120 et l'une des parois transversales de la lumière 111. Le moyen de rappel est configuré de façon à maintenir le galet 120 dans une position dite déverrouillée, en l'absence de force extérieure appliquée sur le galet 120, ou sur le corps principal 110. En particulier, la position déverrouillée est une position extrême du galet 120. La position extrême déverrouillée est représentée à la figure 3 notamment.

Dans le cas d'un ressort 130 comme moyen de rappel, le ressort 130 est un ressort, préférentiellement hélicoïdal, de compression. Ce dernier peut être maintenu en position entre la paroi transversale et le galet 120 par introduction sur un téton ou encore par introduction dans une ouverture borgne de l'un ou l'autre des éléments.

D'autres moyens de rappels peuvent toutefois être envisagés, tel qu'un bloc de matière élastique, par exemple.

Le dispositif d'accouplement 100 comprend par ailleurs une bride 140. La bride 140 possède une base sensiblement de la même forme et de mêmes dimensions que la base du corps principal 110 cylindrique. Il est toutefois envisageable que la bride 140 possède une base de forme différente, et de dimensions inférieures à celles de la base du corps principal 110.

La bride 140 est fixée au galet 120 d'un côté du corps principal 110. Préférentiellement, la fixation de la bride 140 est excentrique sur le galet 120, c'est-à-dire que le galet 120 n'est pas centré sur la bride 140. La bride peut toutefois être fixée de façon non excentrique, c'est-à-dire centrale, si la forme et dimension du galet 120 le permettent.

L'excentricité de la fixation est choisie de telle manière, pour que la base de la bride 140 prolonge le corps principal 110, c'est-à-dire que le base de la bride 140 et la base du corps principal 110 soient superposées, sans saillir l'un par rapport à l'autre, lorsque le galet 120 est dans la position déverrouillée.

Selon une variante non représentée, la bride 140 peut être sensiblement cylindrique, et notamment être de même géométrie que le corps principal 110. La bride 140 est alors toutefois généralement de hauteur plus réduite, par rapport à la hauteur du corps principal 110, et peut notamment présenter la forme d'une plaque circulaire ou prismatique.

Selon une variante préférentielle, la bride 140 est de forme tronconique, la base de la forme tronconique étant proximale du corps principal 110. En d'autres termes, la bride 140 s'affine en s'éloignant du corps principal 110. Comme cela sera expliqué ci-après, une telle forme est particulièrement avantageuse lors de l'opération de couplage de modules 11.

En particulier, le tronc de cône est oblique. Afin de former une « pointe » sensiblement centrale, le cône est tronqué selon un plan non parallèle à la base du tronc de cône.

Afin de solidariser la bride 140 et le galet 120 entre eux, mais également solidariser le dispositif d'accouplement 100 en tant que tel à un module 11, une vis 150 de fixation est utilisée. La bride 140 présente une ouverture traversante, préférentiellement excentrique dans le cas d'une bride excentrique, colinéaire à une ouverture traversante du galet 120. La vis 150 traverse lesdites ouvertures et est visée soit dans le module 11 mâle, soit dans une contre-bride 12 s'appuyant contre la face intérieure de la paroi du module 11 mâle.

De cette manière, la bride 140 et le galet 120 sont fixés contre la paroi du module 11, tandis que le corps principal 110 est mobile relativement au galet 120.

Afin de maintenir le dispositif d'accouplement 100 en position angulaire contre la paroi du module 11, et éviter toute rotation du dispositif d'accouplement 100, un moyen de maintien en position est prévu.

En particulier, un tel moyen de maintien en position est un téton 121 saillant du galet 120, du côté opposé à la bride 140. Le téton 121 est introduit dans une ouverture correspondante pratiquée dans la paroi du module 11.

De manière similaire, afin de maintenir la bride 140 en position angulaire sur le galet 120, un téton 122 est avantageusement prévu à l'opposé du téton 121, c'est à dire sur le côté du galet 120 situé du côté de la bride 140. Le téton 122 est introduit dans une ouverture correspondante pratiquée dans la base de la bride 140.

Selon un mode de réalisation non représenté, il est également envisageable de réaliser le galet 120 et la bride 140 d'une seule pièce, ou encore de lier le galet 120 et la bride 140 par une liaison de matière. Dans un tel cas, la présence d'un téton 122 n'est pas indispensable. De plus il est également possible de réaliser la vis 150 en une seule partie avec le galet 120 et la bride 140, la vis 150 prenant alors la forme d'une tige filetée saillante du galet 120.

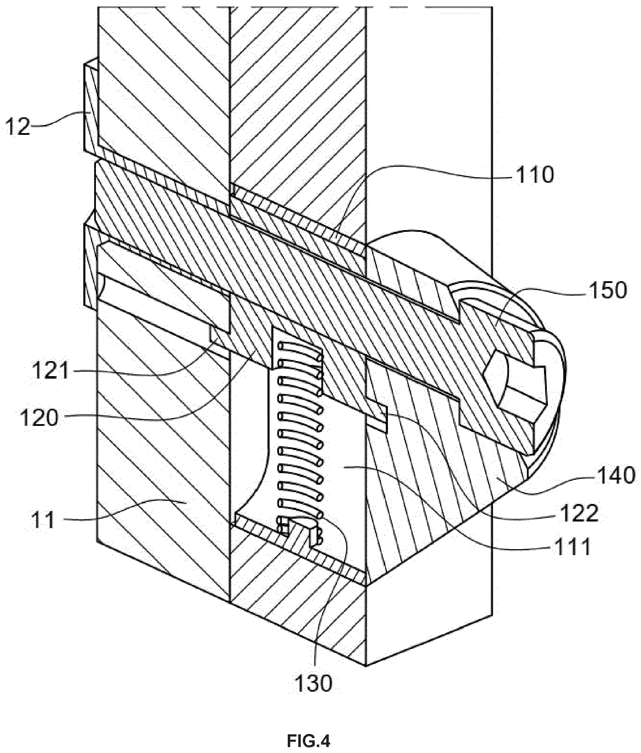

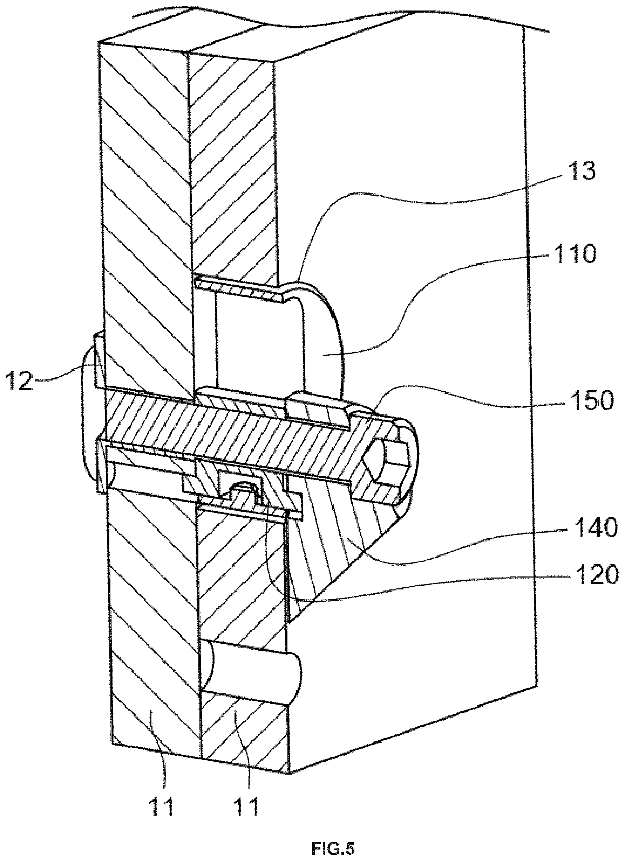

Il est maintenant fait références au figures 4 et 5, illustrant le fonctionnement du dispositif d'accouplement 100.

La figure 4 représente le dispositif d'accouplement 100 avant le verrouillage de deux modules 11, et la figure 5 représente le dispositif d'accouplement 100 après le verrouillage de deux modules 11 tels que ceux représentés aux figures 1 et 2. Sur la figure 5, le moyen de rappel 130, comprimé entre la paroi transversale de la lumière 111 et le galet 120 a été omis pour des raisons de clarté.

Avant le verrouillage de deux modules 11, le dispositif d'accouplement 100 est fixé sur l'un des modules 11, appelé module mâle. Sur les figures 1 et 2, le module 11 de forme cylindrique hexagonale est un module mâle.

La fixation du dispositif d'accouplement 100 sur le module mâle est réalisée par exemple par vissage direct dans la paroi du module 11, ou dans une contre-bride 12, tel que cela a été explicité plus en amont.

Un second module 11, appelé module femelle, correspondant au module de forme parallélépipédique sur les figures 1 et 2, est ensuite approché du module mâle. Le module 11 femelle comprend une ouverture 13 cylindrique correspondante à la base du corps principal 110 cylindrique du dispositif d'accouplement 100. En particulier, l'ouverture 13 possède un diamètre supérieur ou égal à 45 millimètres. L'ouverture 13 cylindrique du module 11 femelle est disposé en vis-à-vis du dispositif d'accouplement 100. Le dispositif d'accouplement 100 est ensuite introduit dans l'ouverture 13 cylindrique, par rapprochement des modules 11 l'un vers l'autre, jusqu'à ce que les parois des modules 11 entrent en contact.

Lorsque la bride 140 présente une forme tronconique, l'insertion d'un dispositif d'accouplement 100 dans une ouverture 13 est particulièrement facilité, la forme conique guidant le module d'accouplement 100 dans l'ouverture 13. Cet aspect est d'autant plus avantageux dans la mesure où le couplage de modules 11 se fait en générale à l'aveugle, sans vision directe sur le dispositif d'accouplement 100 et l'ouverture 13. Une telle forme de la bride 140 permet également de pallier un léger désalignement du dispositif d'accouplement 100 et de l'ouverture 13 lors du positionnement en vis-à-vis.

Au cours de cette première phase de couplage entre les deux modules 11, le module 11 femelle est légèrement abaissé par rapport au module 11 mâle, ou, de manière équivalente, le module 11 mâle est légèrement relevé par rapport au module 11 femelle.

Au cours d'une seconde phase de couplage, afin de verrouiller les modules 11 l'un à l'autre, le module 11 mâle est abaissé. En d'autres termes, le module 11 mâle est déplacé en translation en direction de la surface, généralement plane, sur laquelle les modules 11 sont installés. Cette situation est représentée à la figure 2, sur laquelle le module 11 mâle, de forme hexagonale, est initialement soulevé, puis abaissé.

Selon une autre possibilité, le module 11 femelle est relevé. Autrement dit, le module 11 femelle est déplacé en translation en éloignement de la surface sur laquelle les modules 11 sont installés.

En d'autres termes, le verrouillage des modules 11 l'un à l'autre est réalisé par translation relative des modules 11, dans des sens opposés et dans une direction sensiblement orthogonale à la surface sur laquelle les modules 11 reposent.

Dans l'un ou l'autre des cas, l'amplitude de la translation est préférentiellement d'environ 20 millimètres.

Le corps principal 110 étant disposé dans l'ouverture 13 du module 11 femelle, il est entraîné avec le module 11 femelle lors de la translation relative décrite ci-avant. De manière similaire, le galet 120 et la bride 140 étant fixés au module 11 mâle, ces derniers sont entrainés avec le module 11 mâle lors de la translation relative décrite ci-avant.

Ainsi, à l'issue de cette seconde phase de couplage, le galet 120 se trouve dans une position dite verrouillée, qui est en particulier une seconde position extrême. Toutefois, selon les configurations (par exemple lorsque la translation relative est d'amplitude plus faible), le galet 120 également peut se trouver dans une position verrouillée intermédiaire, non extrême, sans préjudice du verrouillage réalisé.

Quel que soit la seconde position, dès que le galet 120 est dans une position différente de la position déverrouillée, c'est-à-dire dans une position verrouillée, la base de la bride 140 forme une butée contre la paroi du module 11 femelle. Plus le galet 120 est déplacé en direction de la position verrouillée, plus la surface de la base de la bride 140 qui forme butée est importante.

Cette fonction de butée de la base de la bride 140 assure le couplage des modules 11, qui sont alors fermement plaqués l'un contre l'autre, paroi contre paroi.

Il est fait remarquer qu'un module 11 n'est pas nécessairement exclusivement de type mâle ou femelle, et peut présenter à la fois au moins une face mâle et au moins une face femelle, pour être couplé à au moins deux autres modules respectivement femelle et mâle.

L'utilisation du dispositif d'accouplement 100 s'inscrivant dans un système modulaire, il est prévu que la disposition des points de fixation des dispositifs d'accouplement 100, et des ouvertures 13, sur les modules 11, soit standardisée. Il est par ailleurs prévu qu'une paroi d'un module puisse être mâle ou femelle selon les besoins, en prévoyant à la fois des ouvertures 13 et des points de fixation du dispositif d'accouplement 100 sur une même paroi.

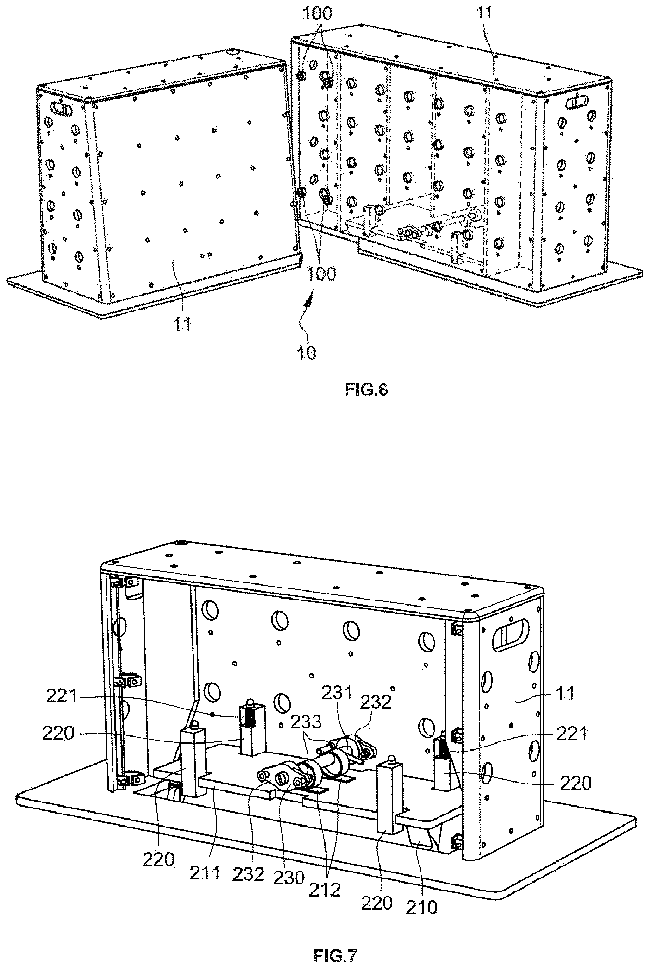

Avantageusement, deux modules 11 sont couplés au moyen d'au moins deux dispositifs d'accouplement 100. De cette manière, une stabilité et cohésion satisfaisante peut être obtenue, sans risque de rotation des modules 11 l'un par rapport à l'autre. Lorsque les modules 11 sont plus volumineux, un nombre plus important de dispositifs d'accouplement 100 peut être choisi. Par exemple, tel que cela est représenté à la figure 6, quatre dispositifs d'accouplement 100 sont utilisés pour coupler des modules 11 arrangés en L.

Tel que cela a été décrit précédemment, les modules 11 mâle et femelle sont déplacés en translation relativement l'un à l'autre lors de l'opération de couplage.

Lorsque l'espace disponible à l'intérieur d'un module 11 le permet, un dispositif de levage 200 peut être intégré au module 11. Pour les modules 11 de taille réduite et plus légers (tel que le module mâle hexagonal des figures 1 et 2), un système de levage n'est pas nécessaire, ces modules pouvant en général être soulevés par des opérateurs.

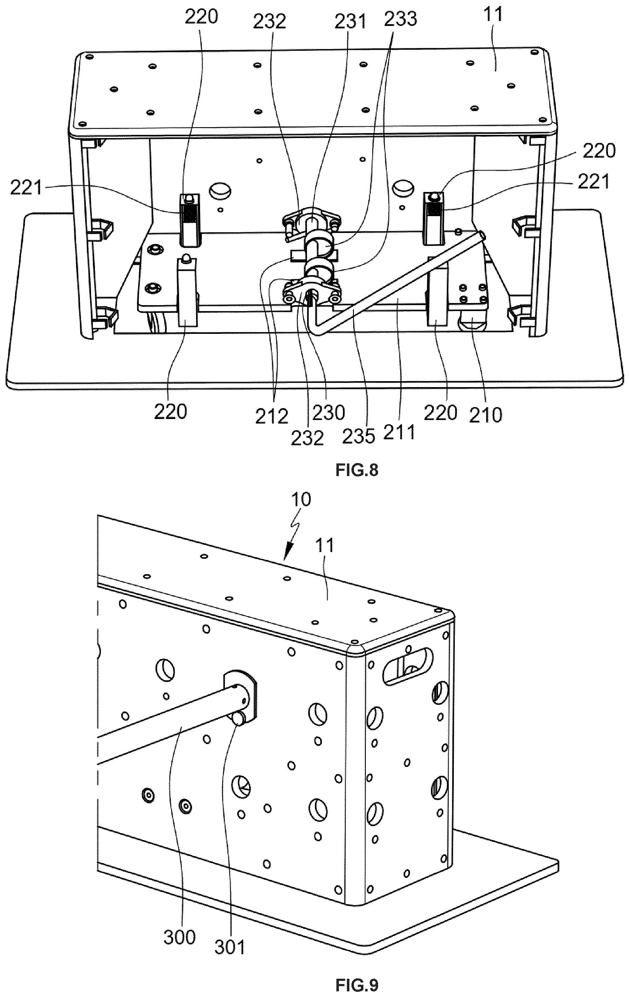

Le dispositif de levage 200, visible sur les figures 7 et 8, comprend un chariot 210 destiné à rester en contact avec la surface sur laquelle le module 11 est installé. Le chariot 210 est relié aux parois du module 11 par l'intermédiaire de glissières 220, permettant au module 11 de se déplacer en translation par rapport au chariot 210. Le chariot 210 est muni de roulettes.

Préférentiellement, les glissières 220 sont chacune munies d'un moyen de rappel tel un ressort 221 de traction, pour assister le déplacement du module 11 en translation.

Le module 11 peut être déplacé aisément grâce aux roulettes, la base du module 11 n'étant par défaut pas en contact avec le sol.

Sur le module 11 est agencé un mécanisme de levage 230. Le mécanisme de levage 230 comprend un arbre 231 horizontal fixé libre en rotation sur les parois du module 11 par l'intermédiaire de flasques 232. Sur l'arbre 231 est fixé au moins une, préférentiellement deux, came 233 excentrique. La came 233 est circulaire de rayon r, et possède un point de fixation excentrique situé à une distance e du centre de la came 233.

Le chariot 210 comprend un plateau 211 avec une surface d'appui 212 de la ou les cames 233. Préférentiellement, la surface d'appui 212 est renforcée par une plaque métallique.

L'arbre 231 est fixé de manière à se trouver sensiblement au niveau du plateau 211 lorsque le module 11 est en position abaissée.

La came 233 est orientée sur l'arbre 231 de façon à ce que, par la rotation de l'arbre 231, la came 233 excentrique est mise en contact avec la surface d'appui 212 et l'excentricité est rapprochée de la surface d'appui 212. Lorsque la rotation de l'arbre 231 est poursuivie davantage, le module 11 entier est relevé et déplacé en translation par rapport au chariot 210, par réaction à la came 233 s'appuyant sur le plateau 211 du chariot 210.

Afin de maintenir le module 11 dans une position abaissée, en particulier lorsqu'il est verrouillé à un autre module 11, la came 233 peut être munie d'un méplat, préférentiellement diamétralement opposé au point de fixation sur l'arbre 231 et/ou d côté du point de fixation. De cette manière, la position abaissée et/ou relevée est rendue stable.

La rotation de l'arbre 231 peut être actionnée manuellement, par l'intermédiaire d'un bras de levier 235 solidaire de l'arbre 231, et dépassant latéralement du module 11. De manière alternative, la rotation de l'arbre 231 peut être motorisée.

Par ailleurs, le dispositif d'accouplement 100 décrit ci-avant n'est non seulement adapté pour coupler deux modules 11, mais également pour fixer un agrès à un module 11.

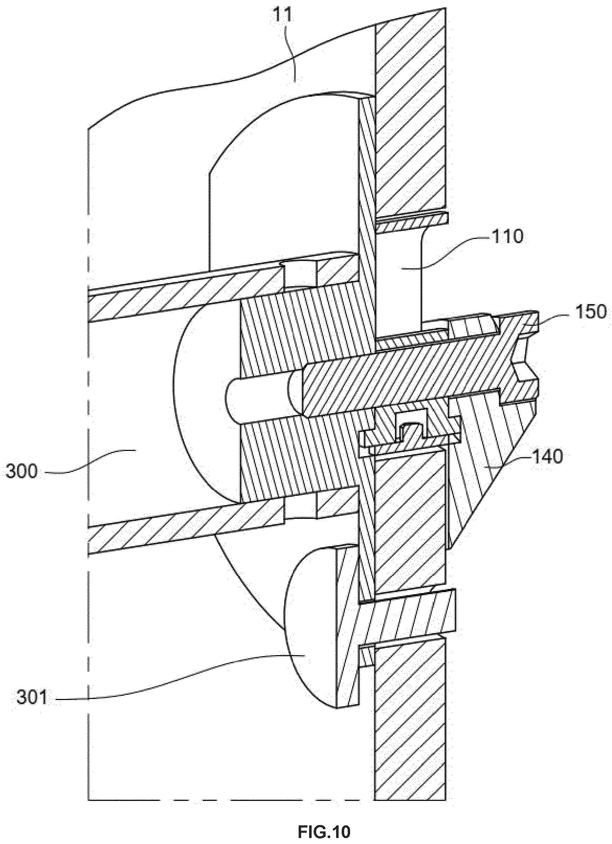

Tel que cela est représenté aux figure 9 et 10, un agrès tel une barre 300 peut être fixé sur un module 11. Sur la figure 10, le moyen de rappel 130, comprimé entre la paroi transversale de la lumière 111 et le galet 120 a été omis pour des raisons de clarté.

Le fonctionnement du dispositif d'accouplement 100 est sensiblement similaire à celui du couplage de deux modules 11. Le dispositif d'accouplement 100 est fixé à l'agrès, qui est alors un élément mâle.

Après que le dispositif d'accouplement 100 ait été introduit dans l'ouverture 13 du module 11 femelle, l'agrès est abaissé et le dispositif d'accouplement 100 est en position verrouillée.

Afin de maintenir l'agrès sur le module 11, et d'empêcher toute rotation de l'agrès sur ce dernier, un moyen de maintien en position angulaire est prévu sur l'agrès.

Tel que représenté sur la figure 10, un tel moyen de maintien peut prendre la forme d'une vis ou goupille 301, introduite dans une ouverture de l'agrès mâle et dans une ouverture du module 11. De cette manière, une translation ainsi qu'une rotation de l'agrès sur le module 11 peut être évitée.

De cette manière, une bonne tenue de l'agrès sur le module 11 peut être assurée, même en cas de fortes sollicitations de l'agrès dans toutes les directions axiales.

## Revendications

1. Dispositif d'accouplement (100) entre un élément de structure (11) mâle, ou un agrès (300) mâle, et un élément de structure (11) femelle d'une installation (10) destinée à une pratique sportive tel que le parkour ou l'escalade, **caractérisé en ce que :**
- ledit dispositif comprend un corps principal (110) cylindrique destiné à être introduit dans une ouverture (13) cylindrique correspondante d'une paroi dudit élément de structure (11) femelle,
- ledit corps principal (110) comprend une lumière (111) transversale dans laquelle est agencé un galet (120) apte à coulisser entre deux positions extrêmes, ainsi qu'un moyen de rappel (130) dudit galet dans une position dite déverrouillée, dans laquelle le dispositif (100) est à apte à être introduit ou retiré de ladite ouverture (13) de l'élément de structure (11) femelle,
- ledit galet (120) est apte à être fixé audit élément de structure (11) mâle ou agrès (300) mâle d'un côté du corps principal (110), et est lié à une bride (140) d'un autre côté du corps principal (110),
- ladite bride (140) possède une base prolongeant ledit corps principal (110) cylindrique lorsque ledit galet (120) est dans la position déverrouillée, et adaptée pour former une butée contre la paroi dudit élément de structure (11) femelle lorsque ledit galet (120) est dans une position dite verrouillée, de manière à coupler ledit élément de structure (11) mâle, ou agrès (300) mâle, audit élément de structure (11) femelle.

2. Dispositif (100) selon la revendication 1, dans lequel ledit corps principal (110) est cylindrique circulaire droit.

3. Dispositif (100) selon la revendication 1, dans lequel ledit corps principal (110) est prismatique droit.

4. Dispositif (100) selon la revendication 2, dans lequel ledit corps principal (110) possède un diamètre supérieur ou égal à 43 millimètres.

5. Dispositif (100) selon l'une quelconque des revendications précédentes, dans lequel ladite bride (140) est de forme tronconique avec une base proximale dudit corps principal (110).

6. Dispositif (100) selon l'une quelconque des revendications précédentes, dans lequel la base de ladite bride (140) est sensiblement de même forme et de mêmes dimensions que la base du corps principal (110) cylindrique.

7. Dispositif (100) selon l'une quelconque des revendications précédentes, dans lequel ledit galet (120) possède un premier téton (121) saillant d'un côté du corps principal (110), destiné à être introduit dans une ouverture correspondante de l'élément de structure (11) mâle ou agrès (300) mâle, et un second téton (122) saillant de l'autre côté du corps principal (110), introduit dans une ouverture correspondante pratiquée dans la base de ladite bride (140).

8. Dispositif (100) selon l'une quelconque des revendications précédentes, comprenant une vis (150) de fixation traversant ledit galet (120) et ladite bride (140), destinée à être visée dans ledit élément de structure (11) mâle ou agrès (300) mâle, ou dans une contre-bride (12) apte à s'appuyer sur ledit élément de structure (11) mâle ou agrès (300) mâle.

9. Dispositif (100) selon l'une quelconque des revendications précédentes, dans lequel ledit moyen de rappel (130) est un ressort hélicoïdal de compression.

10. Installation sportive (10) comprenant un élément de structure (11) femelle, tel un module de parkour, et un élément de structure (11) mâle, tel un autre module de parkour, ledit élément de structure (11) femelle et ledit élément de structure (11) mâle étant couplés au moyen d'au moins un dispositif d'accouplement (100) selon l'une quelconque des revendications 1 à 9 fixé audit élément de structure (11) mâle et étant introduit dans une ouverture (13) correspondante d'une paroi dudit élément de structure (11) femelle.

11. Installation sportive (10) selon la revendication 10, dans lequel ledit élément de structure (11) femelle et ledit élément de structure (11) mâle sont couplés au moyen d'au moins deux dispositifs d'accouplement (100).

12. Installation sportive (10) comprenant un élément de structure (11) femelle, tel un module de parkour, et un agrès (300) mâle, tel une prise d'escalade, une barre ou poignée, ledit élément de structure (11) femelle et ledit agrès (300) mâle étant couplés au moyen d'au moins un dispositif d'accouplement (100) selon l'une quelconque des revendications 1 à 9 fixé audit agrès (300) mâle et étant introduit dans une ouverture (13) correspondante d'une paroi dudit élément de structure (11) femelle.

13. Installation sportive (10) selon la revendication 12, dans laquelle ledit agrès (300) mâle comprend un moyen de maintien (301) en position angulaire dudit agrès (300) sur ledit élément de structure (11) femelle, ledit moyen de maintien (301) étant préférentiellement une goupille ou une vis introduite dans une ouverture dudit agrès (300) mâle et dudit élément de structure (11) femelle.

14. Ensemble comprenant un élément de structure (11) comprenant au moins un point de fixation d'un dispositif d'accouplement (100) selon l'une quelconque des revendications 1 à 9, et comprenant en outre un dispositif de levage (200) de l'élément de structure, configuré pour déplacer l'élément de structure (11) entre une position relevée par défaut, et une position abaissée.

15. Ensemble selon la revendication 14, dans lequel ledit dispositif de levage (100) comprend un chariot (210) muni de roulettes, ledit élément de structure (11) étant agencé mobile en translation sur ledit chariot (210).

## Patentansprüche

1. Kupplungsvorrichtung (100) zwischen einem steckerartigen Strukturelement (11) oder einem steckerartigen Gerät (300) und einem buchsenartigen Strukturelement (11) einer Anlage (10), die für eine sportliche Betätigung wie Parkour oder Klettern bestimmt ist, **dadurch gekennzeichnet, dass:**
- die Vorrichtung einen zylindrischen Hauptkörper (110) umfasst, der dazu bestimmt ist, in eine entsprechende zylindrische Öffnung (13) einer Wand des buchsenartigen Strukturelements (11) eingeführt zu werden,
- der Hauptkörper (110) ein Querlumen (111) umfasst, in dem eine Rolle (120) angeordnet ist, die zwischen zwei Endpositionen gleiten kann, sowie ein Rückstellmittel (130) der Rolle in eine entriegelte Position, in der die Vorrichtung (100) in die Öffnung (13) des buchsenartigen Strukturelements (11) eingeführt oder aus dieser entfernt werden kann,
- die Rolle (120) geeignet ist, an dem steckerartigen Strukturelement (11) oder steckerartigen Gerät (300) auf einer Seite des Hauptkörpers (110) befestigt zu werden, und mit einem Flansch (140) auf einer anderen Seite des Hauptkörpers (110) verbunden ist,
- der Flansch (140) einen Sockel besitzt, der den zylindrischen Hauptkörper (110) verlängert, wenn sich die Rolle (120) in der entriegelten Position befindet, und ausgelegt ist, einen Anschlag gegen die Wand des buchsenartigen Strukturelements (11) zu bilden, wenn sich die Rolle (120) in einer sogenannten verriegelten Position befindet, um das steckerartige Strukturelement (11) oder das steckerartige Gerät (300) mit dem buchsenartigen Strukturelement (11) zu koppeln.

2. Vorrichtung (100) nach Anspruch 1, wobei der Hauptkörper (110) kreiszylindrisch gerade ist.

3. Vorrichtung (100) nach Anspruch 1, wobei der Hauptkörper (110) prismatisch gerade ist.

4. Vorrichtung (100) nach Anspruch 2, wobei der Hauptkörper (110) einen Durchmesser von 43 Millimetern oder mehr besitzt.

5. Vorrichtung (100) nach einem der vorhergehenden Ansprüche, wobei der Flansch (140) eine konische Form mit einem Sockel, der dem Hauptkörper (110) proximal ist, aufweist.

6. Vorrichtung (100) nach einem der vorhergehenden Ansprüche, wobei der Sockel Basis des Flansches (140) im Wesentlichen dieselbe Form und dieselben Abmessungen wie der Sockel des zylindrischen Hauptkörpers (110) aufweist.

7. Vorrichtung (100) nach einem der vorhergehenden Ansprüche, wobei die Rolle (120) einen ersten Zapfen (121), der von einer Seite des Hauptkörpers (110) hervorsteht und dazu bestimmt ist, in eine entsprechende Öffnung des steckerartigen Strukturelements (11) oder des steckerartige Geräts (300) eingeführt zu werden, und einen zweiten Zapfen (122) besitzt, der von der anderen Seite des Hauptkörpers (110) hervorsteht und in eine entsprechende Öffnung eingeführt wird, die in dem Sockel des Flansches (140) ausgebildet ist.

8. Vorrichtung (100) nach einem der vorhergehenden Ansprüche, umfassend eine Befestigungsschraube (150), die durch die Rolle (120) und den Flansch (140) geht und dazu bestimmt ist, in das steckerartige Strukturelement (11) oder das steckerartige Gerät (300) oder in einen Gegenflansch (12), der geeignet ist, sich auf das steckerartige Strukturelement (11) oder das steckerartige Gerät (300) abzustützen, eingeschraubt zu werden.

9. Vorrichtung (100) nach einem der vorhergehenden Ansprüche, wobei das Rückstellmittel (130) eine Druckschraubenfeder ist.

10. Sportanlage (10), die ein buchsenartiges Strukturelement (11), wie ein Parkour-Modul, und ein steckerartiges Strukturelement (11), wie ein anderes Parkour-Modul, umfasst, wobei das buchsenartige Strukturelement (11) und das steckerartige Strukturelement (11) mittels mindestens einer Kupplungsvorrichtung (100) nach einem der Ansprüche 1 bis 9 gekoppelt sind, die an dem steckerartigen Strukturelement (11) befestigt ist und in eine entsprechende Öffnung (13) einer Wand des buchsenartigen Strukturelements (11) eingeführt ist.

11. Sportanlage (10) nach Anspruch 10, wobei das buchsenartige Strukturelement (11) und das steckerartige Strukturelement (11) mittels mindestens zweier Kupplungsvorrichtungen (100) gekoppelt sind.

12. Sportanlage (10), die ein buchsenartiges Strukturelement (11), wie ein Parkour-Modul, und ein steckerartiges Gerät (300), wie einen Klettergriff, eine Stange oder einen Griff, umfasst, wobei das buchsenartige Strukturelement (11) und das steckerartige Gerät (300) mittels mindestens einer Kupplungsvorrichtung (100) nach einem der Ansprüche 1 bis 9 gekoppelt sind, die an dem steckerartigen Gerät (300) befestigt ist und in eine entsprechende Öffnung (13) einer Wand des buchsenartigen Strukturelements (11) eingeführt ist.

13. Sportanlage (10) nach Anspruch 12, wobei das steckerartige Gerät (300) ein Haltemittel (301) in einer Winkelposition des Geräts (300) auf dem buchsenartigen Strukturelement (11) umfasst, wobei das Haltemittel (301) vorzugsweise ein Stift oder eine Schraube ist, der bzw. die in eine Öffnung des steckerartigen Geräts (300) und des buchsenartigen Strukturelements (11) eingeführt ist.

14. Baugruppe, die ein Strukturelement (11) umfasst, das mindestens einen Befestigungspunkt einer Kupplungsvorrichtung (100) nach einem der Ansprüche 1 bis 9 umfasst, und ferner eine Hebevorrichtung (200) des Strukturelements umfasst, die so eingerichtet ist, dass sie das Strukturelement (11) zwischen einer standardmäßig angehobenen Position und einer abgesenkten Position bewegt.

15. Baugruppe nach Anspruch 14, wobei die Hebevorrichtung (100) einen mit Rollen versehenen Wagen (210) umfasst, wobei das Strukturelement (11) verschiebbar auf dem Wagen (210) angeordnet ist.

## Claims

1. Coupling device (100) between a male structural element (11), or a male apparatus (300), and a female structural element (11) of a piece of equipment (10) intended for practicing a sport such as parkour or climbing, **characterized in that:**
- said device comprises a cylindrical main body (110) intended to be inserted into a corresponding cylindrical opening (13) in a wall of said female structural element (11),
- said main body (110) comprises a transverse aperture (111) in which is arranged a roller (120) capable of sliding between two end positions, as well as a return means (130) for returning said roller to a so-called unlocked position, in which position the device (100) is capable of being inserted into or removed from said opening (13) in the female structural element (11),
- said roller (120) is capable of being attached to said male structural element (11) or male apparatus (300) on one side of the main body (110), and is connected to a flange (140) on another side of the main body (110),
- said flange (140) has a base extending said cylindrical main body (110) when said roller (120) is in the unlocked position, which base is adapted to form a stop against the wall of said female structural element (11) when said roller (120) is in a so-called locked position, so as to couple said male structural element (11), or male apparatus (300), to said female structural element (11).

2. Device (100) according to claim 1, wherein said main body (110) is a right circular cylinder.

3. Device (100) according to claim 1, wherein said main body (110) is a right prism.

4. Device (100) according to claim 2, wherein said main body (110) has a diameter greater than or equal to 43 millimeters.

5. Device (100) according to any one of the preceding claims, wherein said flange (140) is tapered in shape, with a base proximal to said main body (110).

6. Device (100) according to any one of the preceding claims, wherein the base of said flange (140) has substantially the same shape and dimensions as the base of the cylindrical main body (110).

7. Device (100) according to any one of the preceding claims, wherein said roller (120) has a first stud (121) protruding from one side of the main body (110) and intended to be inserted into a corresponding opening in the male structural element (11) or male apparatus (300), and a second stud (122) protruding from the other side of the main body (110), inserted into a corresponding opening made in the base of said flange (140).

8. Device (100) according to any one of the preceding claims, comprising a fastening screw (150) passing through said roller (120) and said flange (140), and intended to be screwed into said male structural element (11) or male apparatus (300), or into a companion flange (12) capable of bearing on said male structural element (11) or male apparatus (300).

9. Device (100) according to any one of the preceding claims, wherein said return means (130) is a helical pressure spring.

10. Sports equipment (10) comprising a female structural element (11), such as a parkour module, and a male structural element (11), such as another parkour module, said female structural element (11) and said male structural element (11) being coupled to each other by means of at least one coupling device (100) according to any one of claims 1 to 9, which coupling device is attached to said male structural element (11) and inserted into a corresponding opening (13) in a wall of said female structural element (11).

11. Sports equipment (10) according to claim 10, wherein said female structural element (11) and said male structural element (11) are coupled to each other by means of at least two coupling devices (100).

12. Sports equipment (10) comprising a female structural element (11), such as a parkour module, and a male apparatus (300), such as a climbing grip, bar or handle, said female structural element (11) and said male apparatus (300) being coupled to each other by means of at least one coupling device (100) according to any one of claims 1 to 9, which coupling device is attached to said male apparatus (300) and inserted into a corresponding opening (13) in a wall of said female structural element (11).

13. Sports equipment (10) according to claim 12, wherein said male apparatus (300) comprises a means (301) for holding said apparatus (300) in an angular position on said female structural element (11), said holding means (301) being preferably a pin or a screw inserted into an opening in said male apparatus (300) and in said female structural element (11).

14. Assembly comprising a structural element (11) comprising at least one attachment point for the attachment of a coupling device (100) according to any one of claims 1 to 9, and further comprising a lifting device (200) for lifting the structural element, which lifting device is configured to move the structural element (11) between a default raised position, and a lowered position.

15. Assembly according to claim 14, wherein said lifting device (100) comprises a carriage (210) provided with wheels, said structural element (11) being arranged so as to be translatable on said carriage (210).
